# EUROPEAN PATENT SPECIFICATION

(11) **EP 3 564 047 B1**
(45) Date of publication and mention of the grant of the patent: **07.10.2020**
(21) Application number: 19169950.3
(22) Date of filing: 17.04.2019
(51) Int. Cl.: B60C 11/03, B60C 11/12, B60C 11/13

(54) **TYRE**
REIFEN
PNEUMATIQUE

(30) Priority: 01.05.2018 JP 2018088298; 12.07.2018 JP 2018132541
(43) Date of publication of application: 06.11.2019
(73) Proprietor: Sumitomo Rubber Industries, Ltd., Kobe-shi, Hyogo-ken 651-0072 (JP)
(72) Inventor: OSAWA, Eiki, Kobe-shi, Hyogo-ken, 651-0072 (JP); KOBAYASHI, Yukako, Kobe-shi, Hyogo-ken, 651-0072 (JP); FUJITA, Masayuki, Kobe-shi, Hyogo-ken, 651-0072 (JP)
(74) Representative: Manitz Finsterwald Patent- und Rechtsanwaltspartnerschaft mbB

(56) References cited:
- EP-A1- 3 056 359
- EP-A1- 3 081 397
- DE-A1-102016 117 816
- JP-A- 2005 162 145

## Description

### Technical Field

The present invention relates to a tyre, and more specifically, to a tyre whose position when mounted on a vehicle is specified.

### Background Art

Tyres having a specific mounting direction relative to the vehicle generally have tread patterns that are asymmetric relative to the tire equator for increased steering stability. EP 3 056 359 A1 shows an example of such a tyre.

Japanese Unexamined Patent Application Publication No. 2015-217907 has proposed a tyre whose position when mounted on a vehicle is specified. This tyre has a tread portion in which three land regions are divided by two circumferential main grooves. Further, in order to improve steering stability, in this tyre when mounted on a vehicle, a widest land region having the largest width among the three land regions is positioned on an outer side of the vehicle.

when mounted on a vehicle, in the tread portion in which a land region having a large width is positioned on the outer side of the vehicle, impact sound generated when the land region comes into contact with the ground is transmitted toward the outer side of the vehicle, therefore, there has been a demand for improvement in noise performance.

JP 2005-162145 A, EP 3 081 397 A1, and DE 10 2016 117 816 A1 each show a tyre according to the preamble of claim 1.

### Summary of the Invention

The present invention was made in view of the above, and a primary object thereof is to provide a tyre capable of improving the steering stability and the noise performance.

According to claim 1, a tyre whose position when mounted on a vehicle is specified comprises a tread portion in which an outer tread edge and an inner tread edge are defined, the outer tread edge being positioned on an outer side of the vehicle and the inner tread edge being positioned on an inner side of the vehicle when the tyre is mounted on the vehicle, wherein the tread portion is provided with a first main groove extending continuously in a tyre circumferential direction, a second main groove extending continuously in the tyre circumferential direction on a side of the inner tread edge of the first main groove, an outer land region defined between the outer tread edge and the first main groove, a center land region defined between the first main groove and the second main groove, and an inner land region defined between the second main groove and the inner tread edge, a width in a tyre axial direction of the outer land region is larger than a width in the tyre axial direction of each of the center land region and the inner land region, and the center land region is provided with a plurality of first sipes each completely crossing the center land region. The inner land region is provided with inner lateral grooves each extending from the inner tread edge toward the outer tread edge to terminate within the inner land region. The inner land region is provided with fourth sipes each completely crossing the inner land region.

In an embodiment of the invention, it is preferred that the width in the tyre axial direction of the outer land region is in a range of from 0.30 to 0.45 times a tread width.

In an embodiment of the invention, it is preferred that the width in the tyre axial direction of the center land region is in a range of from 0.80 to 1.20 times the width in the tyre axial direction of the inner land region.

In an embodiment of the invention, it is preferred that the first sipes are curved.

In an embodiment of the invention, it is preferred that the outer land region is provided with a plurality of second sipes each completely crossing the outer land region.

In an embodiment of the invention, it is preferred that a total number of the second sipes provided in the outer land region is smaller than a total number of the first sipes provided in the center land region.

In an embodiment of the invention, it is preferred that the outer land region is provided with third sipes each extending from the first main groove toward the outer tread edge to terminate within the outer land region.

In an embodiment of the invention, it is preferred that each of the outer land region, the center land region, and the inner land region is not provided with a vertical narrow groove extending in the tyre circumferential direction with a groove width and a groove depth smaller than those of each of the first main groove and the second main groove.

In an embodiment of the invention, it is preferred that the outer land region is provided with a vertical narrow groove extending in the tyre circumferential direction with a groove width smaller than that of each of the first main groove and the second main groove.

In an embodiment of the invention, it is preferred that a center in the tyre axial direction of the center land region is positioned on a side of the second main groove of a tyre equator, and the center land region is provided with first crown sipes each extending from the first main groove to terminate within the center land region and second crown sipes each extending from the second main groove to terminate within the center land region.

In an embodiment of the invention, it is preferred that each of the first sipes includes, in a cross-sectional view perpendicular to a length direction thereof, a main body portion and a wide width portion arranged on an outer side in a tyre radial direction of the main body portion and having a width larger than that of the main body portion.

In an embodiment of the invention, it is preferred that on an outer surface of the tread portion, an opening width of each of the first sipes is larger than an opening width of each of the first crown sipes and an opening width of each of the second crown sipes.

In an embodiment of the invention, it is preferred that each of the first crown sipes and the second crown sipes has an inner end terminating within the center land region, and the inner ends of the second crown sipes are positioned on a side of the first main groove of the inner ends of the first crown sipes.

In an embodiment of the invention, it is preferred that a maximum depth of each of the first crown sipes and a maximum depth of each of the second crown sipes are smaller than a maximum depth of each of the first sipes.

In an embodiment of the invention, it is preferred that a maximum depth of each of the first crown sipes is larger than a maximum depth of each of the second crown sipes.

In an embodiment of the invention, it is preferred that each of the first sipes has a shallow bottom portion having a depth smaller than a maximum depth of the each of the first sipes, and a maximum depth of each of the second crown sipes is larger than the depth of the shallow bottom portion of each of the first sipes.

In an embodiment of the invention, it is preferred that the second main groove is arranged between the tyre equator and the inner tread edge.

In an embodiment of the invention, it is preferred that the inner land region is provided with a vertical narrow groove extending in the tyre circumferential direction with a groove width and a groove depth smaller than those of each of the first main groove and the second main groove.

### Brief Description of the Drawings

Fig. 1 is a development view of a tread portion of a tyre according to an embodiment of the present invention.
Fig. 2 is an enlarged view of a center land region of Fig. 1.
Fig. 3 is an enlarged view of an outer land region of Fig. 1.
Fig. 4 is an enlarged view of an inner land region of Fig. 1.
Fig. 5 is a development view of the tread portion according to another embodiment of the present invention.
Fig. 6 is a development view of the tread portion of a tyre as Reference 1.
Fig. 7 is a development view of the tread portion of a tyre as Reference 2.
Fig. 8 is a development view of the tread portion according to another embodiment of the present invention.
Fig. 9 is an enlarged view of the center land region of Fig. 8.
Fig. 10A is a cross-sectional view taken along A-A line of Fig. 9.
Fig. 10B is a cross-sectional view taken along B-B line of Fig. 9.
Fig. 11A is a cross-sectional view taken along C-C line of Fig. 9.
Fig. 11B is a cross-sectional view taken along D-D line of Fig. 9.
Fig. 12 is an enlarged view of the outer land region of Fig. 8.
Fig. 13 is a cross-sectional view taken along E-E line of Fig. 12.
Fig. 14 is a cross-sectional view taken along F-F line of Fig. 12.
Fig. 15 is an enlarged view of the inner land region of Fig. 8.
Fig. 16 is a cross-sectional view taken along G-G line of Fig. 15.
Fig. 17 is an enlarged view of the center land region of a tyre according to another embodiment of the present invention.
Fig. 18 is an enlarged view of the center land region of a tyre according to another embodiment of the present invention.
Fig. 19 is an enlarged view of the center land region of a tyre according to another embodiment of the present invention.
Fig. 20 is an enlarged view of the center land region of a tyre as Reference 3.

### Description of the Preferred Embodiment

An embodiment of the present invention will now be described below in detail in conjunction with accompanying drawings.

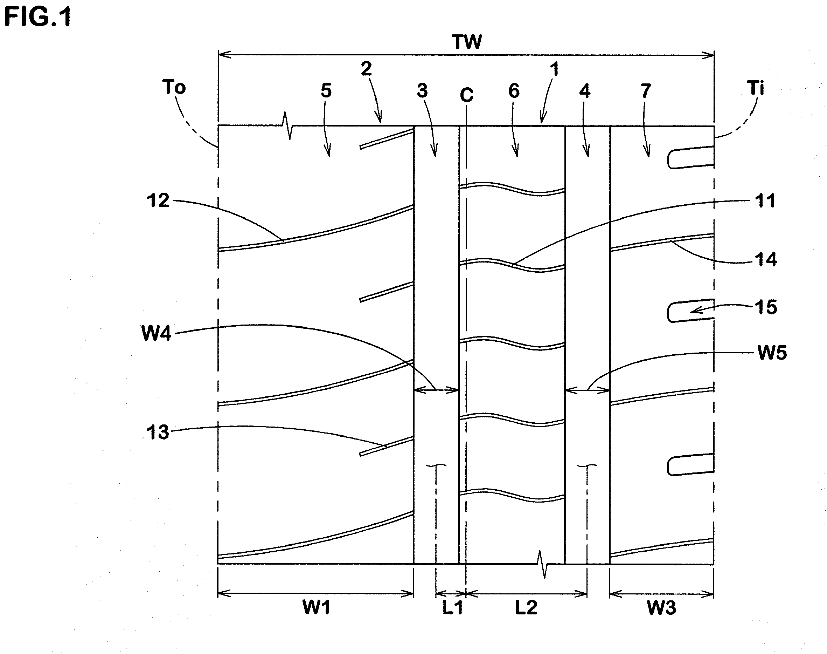

Fig. 1 is a development view of a tread portion 2 of a tyre 1 in this embodiment. The tyre 1 in this embodiment is configured as a pneumatic tyre for a passenger car, for example. In particular, it is preferred that the tyre 1 in this embodiment is used as a tyre for a light car.

As shown in Fig. 1, the position of the tyre 1 of the present invention when mounted on a vehicle is specified. The mounting position of the tyre 1 on a vehicle is indicated by letters or symbols on at least one of sidewall portions (not shown), for example. When the tyre 1 is mounted on a vehicle, in Fig. 1, right side corresponds to an inner side of the vehicle and left side corresponds to an outer side of the vehicle.

By the mounting position on a vehicle being specified, when the tyre 1 is mounted on a vehicle, an inner tread edge (Ti) positioned on the inner side of the vehicle and an outer tread edge (To) positioned on the outer side of the vehicle are specified in the tread portion 2.

In a case of a pneumatic tyre, the inner tread edge (Ti) and the outer tread edge (To) are defined as outermost ground contacting positions in a tyre axial direction when the tyre 1 in a standard state is in contact with a flat surface with zero camber angle by being loaded with a standard tyre load. The standard state is a state in which the tyre is mounted on a standard rim, inflated to a standard inner pressure, and loaded with no tyre load. In this specification, dimensions and the like of various parts of the tyre are those measured under the standard state unless noted otherwise.

The "standard rim" is a wheel rim specified for the concerned tyre by a standard included in a standardization system on which the tyre is based, for example, the "normal wheel rim" in JATMA, "Design Rim" in TRA, and "Measuring Rim" in ETRTO.

The "standard inner pressure" is air pressure specified for the concerned tyre by a standard included in a standardization system on which the tyre is based, for example, the "maximum air pressure" in JATMA, maximum value listed in the "TIRE LOAD LIMITS AT VARIOUS COLD INFLATION PRESSURES" table in TRA, and "INFLATION PRESSURE" in ETRTO.

The "standard tyre load" is a tyre load specified for the concerned tyre by a standard included in a standardization system on which the tyre is based, for example, the "maximum load capacity" in JATMA, maximum value listed in "TIRE LOAD LIMITS AT VARIOUS COLD INFLATION PRESSURES" table in TRA, and "LOAD CAPACITY" in ETRTO.

The tread portion 2 is provided with a first main groove 3 extending continuously in a tyre circumferential direction and a second main groove 4 extending continuously in the tyre circumferential direction on a side of the inner tread edge (Ti) of the first main groove 3.

The first main groove 3 and the second main groove 4 extend continuously in the tyre circumferential direction with relatively large widths and depths in order to discharge water on a road surface toward a rear side of the tyre. In a preferred embodiment, each of the main grooves has a width and a depth of each preferably 5 mm or more, more preferably 6 mm or more. Further, each of a groove width w4 of the first main groove 3 and a groove width w5 of the second main groove 4 is in a range of from 7.0% to 10.0% of a tread width TW, for example. The tread width TW is a distance in the tyre axial direction between the inner tread edge (Ti) and the outer tread edge (To) of the tyre 1 in the standard state. Each of the main grooves extends linearly along the tyre circumferential direction, for example. In another embodiment, each of the main grooves may extend in a non-linear manner such as a zigzag or wavy manner.

It is preferred that a groove center line of the first main groove 3 is arranged between a tyre equator (C) and the outer tread edge (To), for example. The tyre equator (C) in this embodiment is positioned on an outer side of the first main groove 3, but the first main groove 3 may be arranged on the tyre equator (C), for example. It is preferred that a distance L1 in the tyre axial direction between the tyre equator (C) and the groove center line of the first main groove 3 is in a range of from 0.03 to 0.10 times the tread width TW, for example.

It is preferred that the second main groove 4 is arranged between the tyre equator (C) and the inner tread edge (Ti), for example. In this embodiment, a groove center line of the second main groove 4 is positioned on a side of the tyre equator of a center position in the tyre axial direction between the tyre equator (C) and the inner tread edge (Ti). In a preferred embodiment, the center position in the tyre axial direction between the tyre equator (C) and the inner tread edge (Ti) is positioned within the second main groove 4. It is preferred that a distance L2 in the tyre axial direction between the tyre equator (C) and the groove center line of the second main groove 4 is in a range of from 0.20 to 0.30 times the tread width TW, for example.

The tread portion 2 is divided in to an outer land region 5, a center land region 6, and an inner land region 7 by the main grooves described above. The outer land region 5 is defined between the outer tread edge (To) and the first main groove 3. The center land region 6 is defined between the first main groove 3 and the second main groove 4. The inner land region 7 is defined between the second main groove 4 and the inner tread edge (Ti).

The outer land region 5 has a width W1 in the tyre axial direction larger than that of each of the center land region 6 and the inner land region 7. The outer land region 5 configured as such has relatively high rigidity, therefore, it is possible that responsiveness of steering in a situation, such as during changing lanes and during cornering, where large ground contact pressure is applied to the outer land region 5 is improved, thereby, it is possible that excellent steering stability is obtained eventually.

The width W1 in the tyre axial direction of the outer land region 5 is preferably 0.30 times or more, more preferably 0.35 times or more of the tread width TW, and preferably 0.45 times or less of the tread width TW. It is possible that the outer land region 5 configured as such improves the steering stability and the noise performance in a good balance.

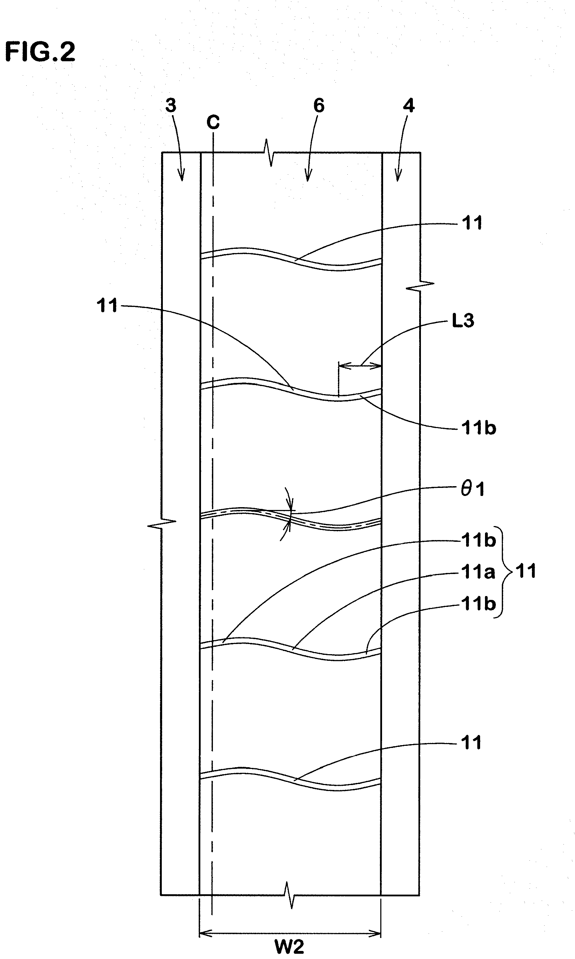

Fig. 2 is an enlarged view of the center land region 6. As shown in Fig. 2, the center land region 6 is arranged on the tyre equator (C). Further, a center position in the tyre axial direction of the center land region 6 is positioned between the tyre equator (C) and the inner tread edge (Ti).

A width w2 in the tyre axial direction of the center land region 6 is in a range of from 0.15 to 0.25 times the tread width TW (shown in Fig. 1 and the same applies hereinafter), for example. In a preferred embodiment, the width w2 of the center land region 6 is in a range of from 0.80 to 1.20 times a width w3 (shown in Fig. 1 and the same applies hereinafter) of the inner land region 7. In a more preferred embodiment, the center land region 6 and the inner land region 7 have about the same widths, and the width w2 of the center land region 6 in this embodiment is in a range of from 1.00 to 1.05 times the width w3 of the inner land region 7. Thereby, the steering stability and the noise performance are improved in a good balance and uneven wear of the center land region 6 and the inner land region 7 is suppressed.

The center land region 6 is provided with a plurality of first sipes 11 each completely crossing the center land region 6. Note that, in this specification, the "sipe" is defined as a narrow incision having a main body portion having a width of less than 2.0 mm. The width of the main body portion of the sipe is preferably less than 1.5 mm, and more preferably in a range of from 0.4 to 1.0 mm. Each of the sipes may have an opening width at a ground contacting surface in a range of from 1.5 to 2.5 mm. Note that each of the sipes has the depth of 1.5 mm or more, and it is distinguished from a shallow narrow groove having a width and a depth each of less than 1.5 mm, for example. Each of the sipes in this embodiment is configured as an incision having the width of less than 1.5 mm in its entirety, and in a preferred embodiment, the width of each of the sipes is less than 1.0 mm.

The first sipes 11 moderately moderates the rigidity of the center land region 6, therefore, the impact sound generated when the center land region 6 comes into contact with the ground is decreased.

It is preferred that each of the first sipes 11 extends in a curved manner, for example. Each of the first sipes 11 in this embodiment includes a center portion (11a) inclined to one side with respect to the tyre axial direction and a pair of outer end portions (11b) connected with the center portion (11a) on both sides thereof and inclined to a side opposite to the center portion (11a) with respect to the tyre axial direction, for example. Thereby, each of the first sipes 11 is curved in a wavy shape. By the first sipes 11 configured as such, it is possible that shearing deformation in the tyre axial direction of the center land region 6 with the sipes as borders is suppressed when opposing sipe walls come into contact with each other, therefore, it is possible that the steering stability is improved consequently.

It is preferred that a length L3 in the tyre axial direction of each of the outer end portions (11b) is in a range of from 0.15 to 0.30 times the width w2 in the tyre axial direction of the center land region 6, for example.

It is preferred that a maximum angle θ1 of each of the first sipes 11 with respect to the tyre axial direction is in a range of from 10 to 30 degrees, for example. The first sipes 11 configured as such are helpful for moderating the impact sound generated when edges thereof contact with the ground.

It is preferred that the center land region 6 is not provided with a groove having a width larger than that of the sipe. The center land region 6 in this embodiment is provided with only the first sipes 11 described above. Thereby, the steering stability is further improved.

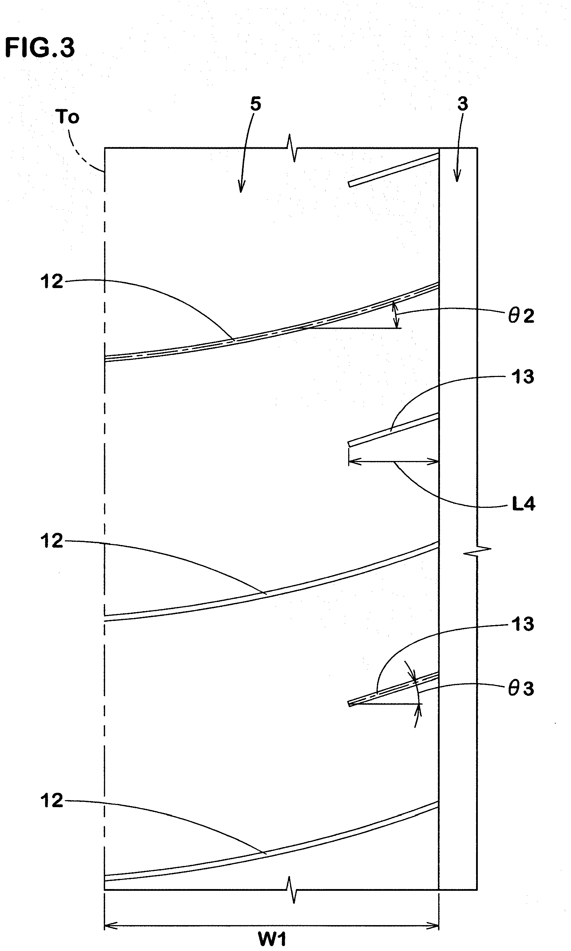

Fig. 3 is an enlarged view of the outer land region 5. As shown in Fig. 3, the outer land region 5 is provided with a plurality of second sipes 12 and a plurality of third sipes 13, for example.

Each of the second sipes 12 extends so as to completely cross the outer land region 5, for example.
Further, each of the second sipes 12 extends in a curved manner so as to connect between the first main groove 3 and the outer tread edge (To).

Each of the second sipes 12 is inclined with respect to the tyre axial direction, for example. It is preferred that the second sipes 12 in this embodiment are inclined to a direction opposite to the center portions (11a) (shown in Fig. 2) of the first sipes 11, for example. The second sipes 12 configured as such together with the first sipes 11 provide frictional force in multiple directions, therefore, they are helpful for exerting excellent steering stability.

It is preferred that an angle θ2 of each of the second sipes 12 with respect to the tyre axial direction is in a range of from 5 to 30 degrees, for example. In a preferred embodiment, the angle θ2 of each of the second sipes 12 with respect to the tyre axial direction is gradually decreased as it goes from the first main groove 3 toward the outer tread edge (To). Thereby, the rigidity in the tyre axial direction of the outer land region 5 is gradually increased toward the outer tread edge (To), therefore, it is possible that the responsiveness of steering during cornering is made linear.

It is preferred that a total number N2 of the second sipes 12 provided in the outer land region 5 is smaller than a total number N1 of the first sipes 11 provided in the center land region 6. It is preferred that the total number N2 of the second sipes 12 is in a range of from 0.4 to 0.6 times the total number N1 of the first sipes 11, and the total number N2 in this embodiment is 0.5 times the total number N1, for example. Such an arrangement of the sipes makes the rigidity of the outer land region 5 relatively large, therefore, it is possible that the steering stability is improved.

Each of the third sipes 13 extends from the first main groove 3 toward the outer tread edge (To) so as to terminate within the outer land region 5, for example. It is preferred that each of the third sipes 13 terminates at a position on a side of the inner tread edge (Ti) of a center position in the tyre axial direction of the outer land region 5, for example. Further, it is preferred that a length L4 in the tyre axial direction of each of the third sipes 13 is larger than the groove width of the first main groove 3. Specifically, it is preferred that a length L4 of each of the third sipes 13 is in a range of from 0.20 to 0.35 times the width W1 of the outer land region 5.

Each of the third sipes 13 is inclined with respect to the tyre axial direction, for example. It is preferred that third sipes 13 are inclined to the same direction as the second sipes 12 with respect to the tyre axial direction. Each of the third sipes 13 is inclined at an angle θ3 in a range of from 10 to 30 degrees with respect to the tyre axial direction, for example. The second sipes 12 and the third sipes 13 in this embodiment are arranged substantially in parallel with each other. Note that the expression "substantially in parallel" includes an embodiment in which an angle difference between the second sipes 12 and the third sipes 13 is less than 5 degrees. It is possible that the third sipes 13 configured as such decrease the noise generated in a part of the first main groove 3 on a side of the outer tread edge (To) while maintaining the steering stability.

It is preferred that the second sipes 12 and the third sipes 13 are arranged alternately in the tyre circumferential direction. Such an arrangement of the sipes is helpful for suppressing the uneven wear of the outer land region 5.

It is preferred that the outer land region 5 is not provided with a groove having a width larger than that of the sipe. The outer land region 5 in this embodiment is provided with only the second sipes 12 and the third sipes 13 described above. Thereby, more excellent steering stability is exerted.

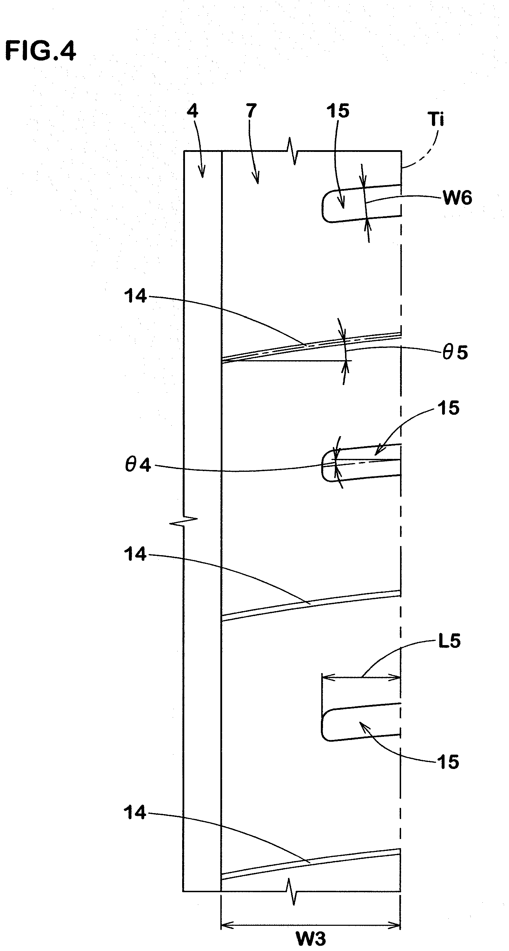

Fig. 4 is an enlarged view of the inner land region 7. As shown in Fig. 4, it is preferred that the width w3 in the tyre axial direction of the inner land region 7 is in a range of from 0.15 to 0.25 times the tread width TW, for example.

According to claim 1, the inner land region 7 is provided with a plurality of inner lateral grooves 15 and fourth sipes 14.

Each of the inner lateral grooves 15 extends from the inner tread edge (Ti) toward the outer tread edge (To) so as to terminate within the inner land region 7. It is preferred that each of the inner lateral grooves 15 terminates at a position on a side of the inner tread edge (Ti) of a center position in the tyre axial direction of the inner land region 7, for example. Further, it is preferred that a length L5 in the tyre axial direction of each of the inner lateral grooves 15 is smaller than length L4 (shown in Fig. 3) in the tyre axial direction of each of the third sipes 13. It is preferred that the length L5 in the tyre axial direction of each of the inner lateral grooves 15 is in a range of from 0.35 to 0.50 times the width w3 in the tyre axial direction of the inner land region 7, for example. It is possible that the inner lateral grooves 15 configured as such improve the steering stability while insuring wet performance.

The inner lateral grooves 15 are inclined to a direction opposite to the center portion (11a) of the first sipes 11 with respect to the tyre axial direction, for example. An angle θ4 of each of the inner lateral grooves 15 with respect to the tyre axial direction is less than 10 degrees, for example.

It is preferred that a groove width w6 of each of the inner lateral grooves 15 is smaller than the groove width w5 (shown in Fig. 1) of the second main groove 4, for example. Specifically, it is preferred that the groove width w6 of the inner lateral grooves 15 is in a range of from 0.35 to 0.45 times the groove width w5 of the second main groove 4. It is possible that the inner lateral grooves 15 configured as such improve the noise performance and the steering stability in a good balance.

According to claim 1, each of the fourth sipes 14 extends so as to completely cross the inner land region 7. Each of the fourth sipes 14 extends in a curved manner so as to connect between the second main groove 4 and the inner tread edge (Ti), for example.

The fourth sipes 14 are inclined with respect to the tyre axial direction, for example. It is preferred that the fourth sipes 14 in this embodiment are inclined to a direction opposite to the center portions (11a) (shown in Fig. 2) of the first sipes 11, for example. The fourth sipes 14 configured as such together with the first sipes 11 provide frictional force in multiple directions, therefore, they are helpful for exerting excellent steering stability.

It is preferred that an angle θ5 of each of the fourth sipes 14 with respect to the tyre axial direction is in a range of from 5 to 15 degrees, for example. In a preferred embodiment, it is preferred that the angle θ5 of each of the fourth sipes 14 with respect to the tyre axial direction is smaller than a maximum angle of each of the second sipes 12 with respect to the tyre axial direction. The fourth sipes 14 configured as such are helpful for exerting excellent traction performance.

As shown in Fig. 1, the tyre 1 in this embodiment is suitably used for a passenger car of a small displacement such as a light car. Thereby, the tread width TW is preferably less than 200 mm, and more preferably in a range of from 140 to 160 mm, for example.

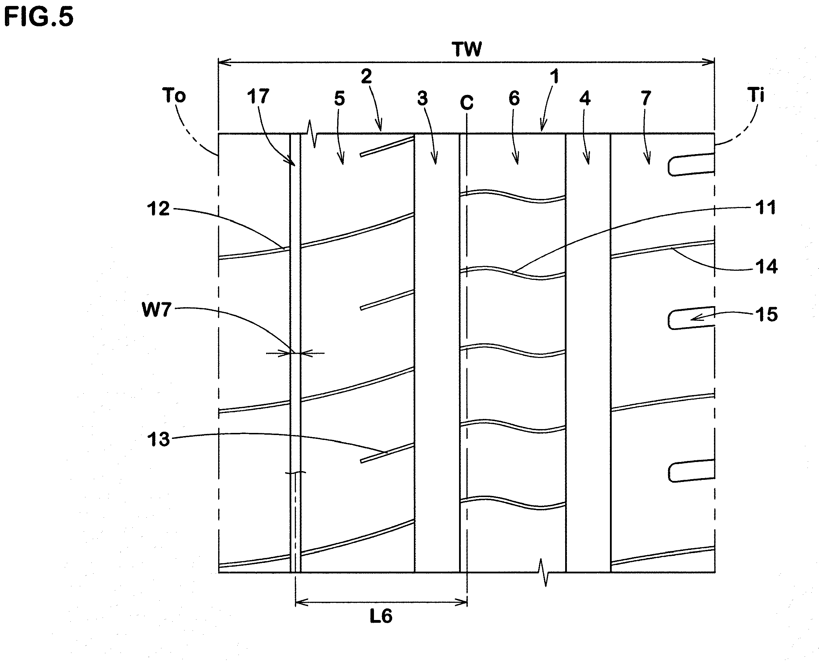

Fig. 5 is a development view of the tread portion 2 according to another embodiment of the present invention. In the embodiment described below, the same reference numerals are given to the elements common to the embodiment described above. In the embodiment shown in Fig. 5, the outer land region 5 is provided with a vertical narrow groove 17 extending in the tyre circumferential direction. The vertical narrow groove 17 has a smaller groove width and a smaller depth than those of each of the first main groove 3 and the second main groove 4. The vertical narrow groove 17 in this embodiment has the groove width and the depth of preferably less than 6 mm, more preferably less than 5 mm. It is possible that the vertical narrow groove 17 configured as such improves the wet performance and decreases the impact sound generated when the outer land region 5 comes into contact with the ground.

Further, in a preferred embodiment, a groove width w7 of the vertical narrow groove 17 is in a range of from 1.5 to 2.5 mm. Similarly, it is preferred that the depth of the vertical narrow groove 17 is in a range of from 1.5 to 2.5 mm.

The vertical narrow groove 17 in this embodiment extends linearly along the tyre circumferential direction. However, it is not limited to such an embodiment, the vertical narrow groove 17 may extend in a zigzag manner, for example.

It is preferred that a distance L6 in the tyre axial direction between the tyre equator (C) and a groove center line of the vertical narrow groove 17 is in a range of from 0.30 to 0.40 times the tread width TW, for example. It is possible that the vertical narrow groove 17 configured as such improves the noise performance while maintaining the steering stability.

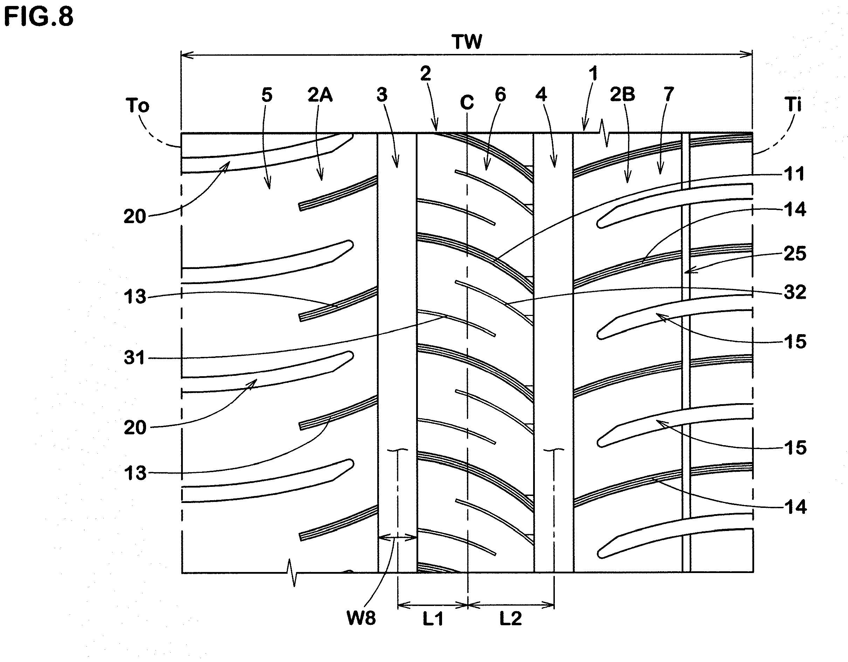

Fig. 8 is a development view of the tread portion 2 according to yet another embodiment of the present invention. A groove width w8 of each of the first main groove 3 and the second main groove 4 arranged in the tread portion 2 in this embodiment is in a range of from 5.0% to 9.0% of the tread width TW. The depth of each of the first main groove 3 and the second main groove 4 is in a range of from 5 to 12 mm, for example. Each of the main groves in this embodiment extends linearly along the tyre circumferential direction, for example.

In this embodiment, it is preferred that the distance L1 in the tyre axial direction between the tyre equator (C) and the groove center line of the first main groove 3 and the distance L2 in the tyre axial direction between the tyre equator (C) and the groove center line of the second main groove 4 is in a range of from 0.08 to 0.20 times the tread width TW, for example. Further, the distance L1 in this embodiment is smaller than the distance L2.

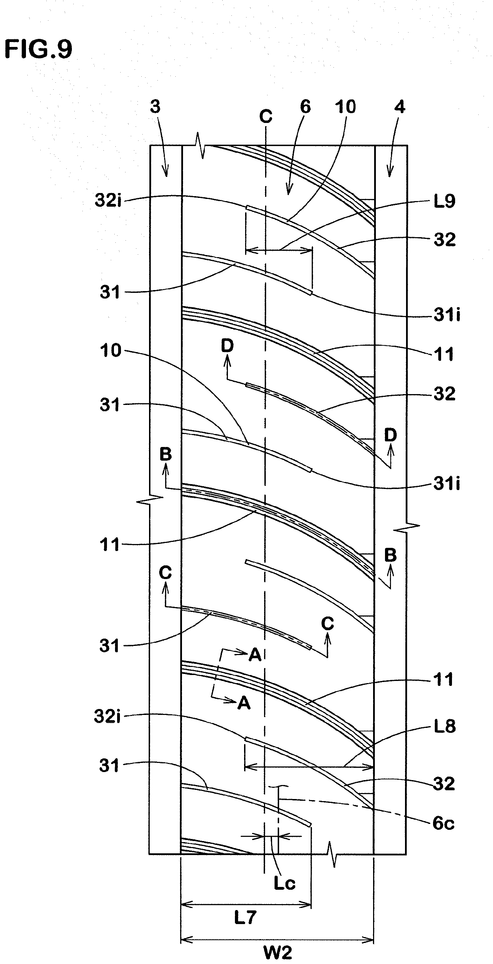

Fig. 9 is an enlarged view of the center land region 6. As shown in Fig. 9, it is preferred that the width w2 of the center land region 6 in this embodiment is in a range of from 0.15 to 0.25 times the tread width TW (shown in Fig. 8 and the same applies hereinafter), for example. Further, a center in the tyre axial direction of the center land region 6 is positioned on a side of the second main groove 4 of the tyre equator (C). Thereby, in this embodiment, a width of a part of the center land region 6 included in an inner tread portion 2B (shown in Fig. 8) defined between the tyre equator (C) and the inner tread edge (Ti) is made large, therefore, excellent steering stability is exerted.

It is preferred that a displacement amount (Lc) of a center (6c) of the center land region 6 is in a range of from 0.05 to 0.10 times the width w2 in the tyre axial direction of the center land region 6, for example. Note that the above-described displacement amount (Lc) is a distance in the tyre axial direction between the tyre equator (C) and the center (6c) in the tyre axial direction of the center land region 6.

The center land region 6 is provided with a plurality of crown sipes 10. In this embodiment, it is preferred that a width of a main body portion of each of the sipes is in a range of from 0.4 to 1.0 mm. Each of the sipes may have an opening width at the ground contacting surface in a range of from 1.5 to 2.5 mm, for example. Note that each of the sipes has a depth of 1.5 mm or more, and it is distinguished from a shallow narrow groove having a width and a depth each of less than 1.5 mm.

The crown sipes 10 include first crown sipes 31 and second crown sipes 32. Each of the first crown sipes 31 extends from the first main groove 3 so as to terminate within the center land region 6. Each of the second crown sipes 32 extends from the second main groove 4 so as to terminate within the center land region 6. Note that the first crown sipes 31 and the second crown sipes 32 may be connected with a shallow narrow groove having a width and a depth each of less than 1.5 mm.

Each of the crown sipes 10 configured as such moderately moderates the rigidity of the center land region 6, therefore, it is possible that ride comfort is improved while the steering stability is maintained. Further, each of the crown sipes 10 makes a rigidity distribution of the center land region 6 uniform, therefore, it is helpful for suppressing the uneven wear of the center land region 6.

In each of the first crown sipes 31 and the second crown sipes 32 terminating within the center land region 6, a portion on an outer end thereof which is connected with a respective one of the main grooves is relatively easy to open and a portion on an inner end thereof which terminates within the center land region 6 is relatively difficult to open. Thereby, torsional deformation is likely to occur in a ground contacting area of the center land region 6 provided with the first crown sipes 31 and the second crown sipes 32. In particular, the center in the tyre axial direction of the center land region 6 in this embodiment is positioned on a side of the second main groove 4 of the tyre equator, therefore, the torsional deformation is even more likely to occur in the ground contacting area of the center land region 6 due to a change of the ground contact pressure. Thereby, when a slip angle is given to the tyre in this embodiment, the ground contacting area of the center land region 6 quickly follows a road surface to generate the torsional deformation, therefore, cornering force is consequently generated without delay. Thereby, the tyre in this embodiment has high initial responsiveness during cornering, therefore, excellent steering stability is exerted.

It is preferred that the first sipes 11 in this embodiment is curved so as to be convex toward one side in the tyre circumferential direction, for example. A radius of curvature of the first sipes 11 is in a range of from 45 to 65 mm, for example. Further, each of the first sipes 11 in this embodiment has an angle with respect to the tyre axial direction gradually increased as it goes from the first main groove 3 to the second main groove 4. It is preferred that the angle of each of the first sipes 11 is in a range of from 5 to 30 degrees with respect to the tyre axial direction, for example. It is possible that the first sipes 11 configured as such provide frictional force in multiple directions by the edges thereof.

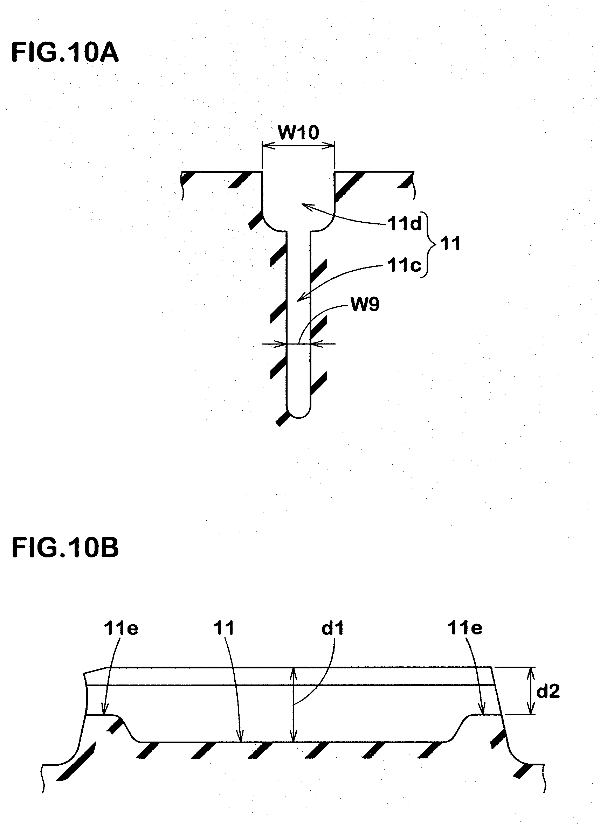

Fig. 10A is a cross-sectional view of one of the first sipes 11 taken along A-A line of Fig. 9. Fig. 10A is the cross-sectional view taken perpendicular to a length direction of the first sipe 11. As shown in Fig. 10A, each of the first sipes 11 includes a main body portion (11c) and a wide width portion (11d) arranged on an outer side in a tyre radial direction and having a width larger than that of the main body portion (11c). It is preferred that a width w9 of the main body portion (11c) is in a range of from 0.4 to 0.8 mm, for example. It is preferred that a width w10 of the wide width portion (11d) is in a range of from 1.0 to 2.0 mm, for example. It is more preferred that the width W10 of the wide width portion (11d) is in a range of from 1.5 to 4.0 times the width w9 of the main body portion (11c). The first sipes 11 configured as such sufficiently moderate the rigidity of the center land region 6, therefore, it is possible that excellent ride comfort is exerted.

Fig. 10B is a cross-sectional view of one of the first sipes 11 taken along B-B line of Fig. 9. As shown in Fig. 10B, each of the first sipes 11 has a shallow bottom portion (11e) having a depth smaller than a maximum depth thereof. Each of the first sipes 11 in this embodiment has the shallow bottom portions (11e) at both end portions thereof in the tyre axial direction, for example. It is possible that the first sipes 11 configured as such is prevented from excessively opening when the ground contact pressure is applied to the center land region 6, therefore, it is possible that excellent steering stability and uneven wear resistance are exerted.

A maximum depth (d1) of each of the first sipes 11 is in a range of from 0.60 to 1.00 times the depth of each of the main grooves, for example. A depth (d2) of the shallow bottom portion (11e) of each of the first sipes 11 is in a range of from 0.40 to 0.85 times the maximum depth (d1), for example.

As shown in Fig. 9, a pair of the first crown sipe 31 and the second crown sipe 32 is arranged between each pair of the first sipes 11 adjacent to each other in the tyre circumferential direction. Each of a length L7 in the tyre axial direction of each of the first crown sipes 31 and a length L8 in the tyre axial direction of each of the second crown sipes 32 is in a range of from 0.50 to 0.80 times the width w2 of the center land region 6, for example.

Each of the first crown sipes 31 and the second crown sipes 32 has an inner end terminating within the center land region 6. In this embodiment, inner ends (32i) of the second crown sipes 32 are positioned on a side of the first main groove 3 of inner ends (31i) of the first crown sipes 31. A sipe overlapping length L9 which is a distance in the tyre axial direction between the inner end (31i) of one of the first crown sipes 31 and the inner end (32i) of one of the second crown sipes 32 is preferably 0.25 times or more, more preferably 0.30 times or more, and preferably 0.45 times or less, more preferably 0.40 times or less the width w2 of the center land region 6, for example. The first crown sipes 31 configured as such and such an arrange of the first crown sipes 31 make it easy for the torsional deformation of the center land region 6 to occur, therefore, they are helpful for improving the initial responsiveness.

Each of the first crown sipes 31 and the second crown sipes 32 is curved so as to be convex toward the same side as the first sipes 11. Thereby, each of the first crown sipes 31 and the second crown sipes 32 has an angle with respect to the tyre axial direction gradually increased as it goes from a side of the first main groove 3 to a side of the second main groove 4. It is preferred that the angle with respect to the tyre axial direction and a radius of curvature of each of the first crown sipes 31 and the second crown sipes 32 are set to in the same range as those of the first sipes 11.

It is preferred that each of the first crown sipes 31 and the second crown sipes 32 extends between a bottom portion thereof and the ground contacting surface of the land region at a width in a range of from 0.4 to 0.8 mm, for example. Thereby, on an outer surface of the tread portion 2, an opening width of each of the first sipes 11 is larger than an opening width of each of the first crown sipes 31 and an opening width of each of the second crown sipes 32. Thereby, the uneven wear resistance in the vicinity of the first crown sipes 31 and the second crown sipes 32 is increased.

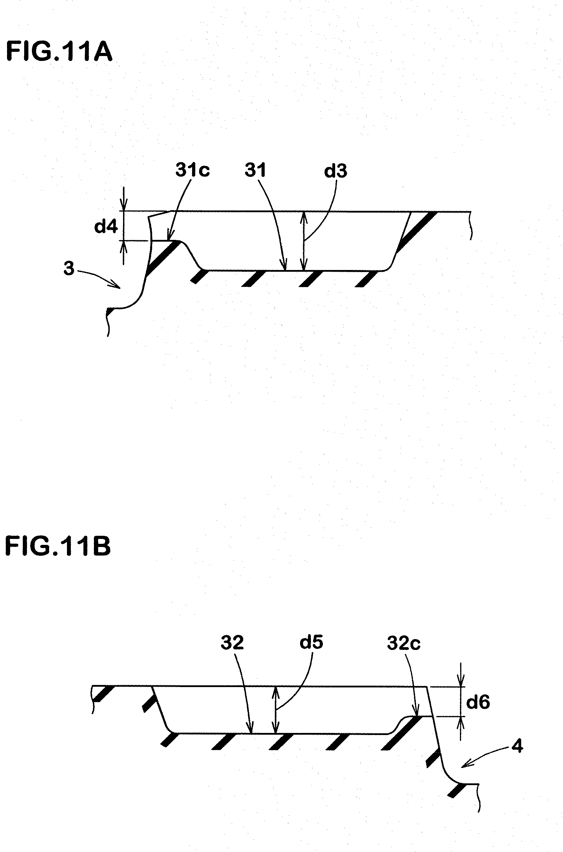

Fig. 11A is a cross-sectional view of one of the first crown sipes 31 taken along C-C line of Fig. 9. Fig. 11B is a cross-sectional view of one of the second crown sipes 32 taken along D-D line of Fig. 9. As shown in Fig. 11A and Fig. 11B, it is preferred that each of a maximum depth (d3) of each of the first crown sipes 31 and a maximum depth (d5) of each of the second crown sipes 32 is smaller than the maximum depth (d1) of each of the first sipes 11, and specifically, in a range of from 0.40 to 0.90 times the maximum depth (d1). The first crown sipes 31 and the second crown sipes 32 configured as such suppress excessive decrease in the rigidity of the center land region 6, therefore, thy are helpful for improving the steering stability.

It is preferred that the maximum depth (d3) of each of the first crown sipes 31 is larger than the maximum depth (d5) of each of the second crown sipes 32.

In order to further improve the initial responsiveness, it is preferred that the maximum depth (d5) of each of the second crown sipes 32 is larger than the depth (d2) of the shallow bottom portion (11e) of each of the first sipes 11.

It is preferred that each of the first crown sipes 31 has a shallow bottom portion (31c) having a depth smaller than the maximum depth thereof. Similarly, it is preferred that each of the second crown sipes 32 has a shallow bottom portion (32c) having a depth smaller than the maximum depth thereof. In this embodiment, each of the shallow bottom portions (31c) and (32c) are provided at an end portion on a side of a respective one of the main grooves of a respective one of the crown sipes 31 and 32. The shallow bottom portions (31c) and (32c) configured as such suppress the sipes from opening excessively, therefore, they are helpful for improving the steering stability.

A depth (d4) of the shallow bottom portion (31c) of each of the first crown sipes 31 and a depth (d6) of the shallow bottom portion (32c) of each of the second crown sipes 32 is in a range of from 0.15 to 0.30 times the depth of each of the main grooves, for example. In a preferred embodiment, each of the depth (d4) of the shallow bottom portion (31c) of each of the first crown sipes 31 and the depth (d6) of the shallow bottom portion (32c) of each of the second crown sipes 32 is smaller than the depth (d2) of the shallow bottom portion (11e) of each of the first sipes 11. Thereby, the rigidity in the vicinity of the first crown sipes 31 and the second crown sipes 32 is increased, therefore, the uneven wear resistance is improved.

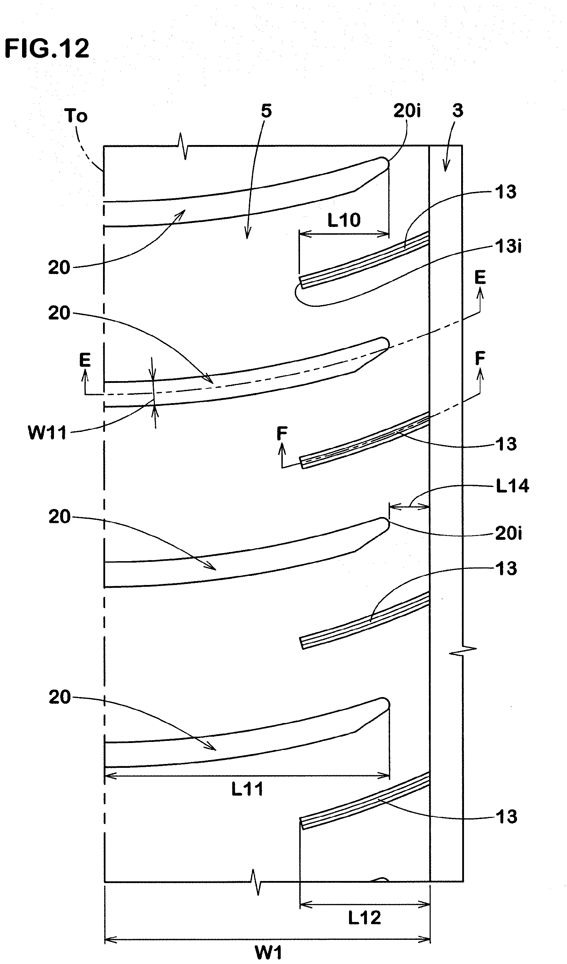

Fig. 12 is an enlarged view of the outer land region 5. As shown in Fig. 12, it is preferred that the width W1 in the tyre axial direction of the outer land region 5 in this embodiment is in a range of from 0.30 to 0.45 times the tread width TW, for example.

The outer land region 5 is provided with outer shoulder lateral grooves 20 and the third sipes 13. Each of the outer shoulder lateral grooves 20 extends from the outer tread edge (To) so as to terminate within the outer land region 5. Each of the third sipes 13 extends from the first main groove 3 so as to terminate within the outer land region 5.

The outer land region 5 provided with the outer shoulder lateral grooves 20 and the third sipes 13 makes it easy for the torsional deformation to occur in the ground contacting area, therefore, it is possible that the initial responsiveness during cornering is improved consequently.

Each of the outer shoulder lateral grooves 20 and the third sipes 13 has an terminating end terminating within the outer land region 5. In this embodiment, terminating ends (13i) of the third sipes 13 are positioned on an outer side in the tyre axial direction of terminating ends (20i) of the outer shoulder lateral grooves 20. Thereby, it is made easy for the torsional deformation to occur in the outer land region 5, therefore, it is possible that the initial responsiveness is further improved.

A distance L10 in the tyre axial direction between the terminating end (20i) of each of the outer shoulder lateral grooves 20 and the terminating ends (13i) of each of the third sipes 13 is in a range of from 0.20 to 0.35 times the width W1 in the tyre axial direction of the outer land region 5, for example. Thereby, excellent initial responsiveness is exerted while the ride comfort is maintained.

Each of the outer shoulder lateral grooves 20 is smoothly curved, for example. It is preferred that each of the outer shoulder lateral grooves 20 has an angle with respect to the tyre axial direction gradually increased as it goes from the outer tread edge (To) toward the first main groove 3, for example. It is preferred that the angle of each of the outer shoulder lateral grooves 20 with respect to the tyre axial direction is in a range of from 0 to 20 degrees, for example.

It is preferred that a length L11 in the tyre axial direction of each of the outer shoulder lateral grooves 20 is in a range of from 0.70 to 0.92 times the width W1 in the tyre axial direction of the outer land region 5, for example. Further, it is preferred that a groove width W11 of each of the outer shoulder lateral grooves 20 is in a range of from 0.25 to 0.45 times the groove width w8.

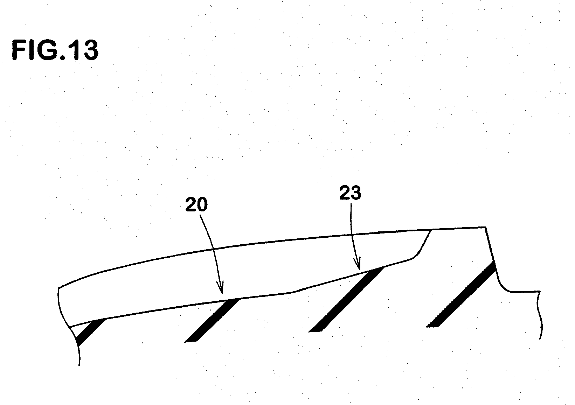

Fig. 13 is a cross-sectional view of one of the outer shoulder lateral grooves 20 taken along E-E line of Fig. 12. As shown in Fig. 13, each of the outer shoulder lateral grooves 20 includes an inner portion 23 positioned on a side of the first main groove 3 of the terminating ends (13i) (shown in Fig. 12) of the third sipes 13. It is preferred that each of the inner portion 23 has a depth gradually decreased toward an inner side in the tyre axial direction, for example. It is possible that the outer shoulder lateral grooves 20 having the inner portions 23 configured as such improve the ride comfort and the steering stability in a good balance.

As shown in Fig. 12, each of the third sipes 13 is curved so as to be convex toward the same direction as the outer shoulder lateral grooves 20, for example. It is preferred that each of the third sipes 13 has an angle with respect to the tyre axial direction in the same range as those of the outer shoulder lateral grooves 20. It is preferred that a radius of curvature of each of the third sipes 13 is in a range of from 100 to 150 mm, for example. Further, in a preferred embodiment, the radius of curvature of each of the third sipes 13 is larger than the radius of curvature of each of the first sipes 11.

It is preferred that a length L12 in the tyre axial direction of each of the third sipes 13 is in a range of from 0.30 to 0.70 times the width W1 in the tyre axial direction of the outer land region 5, for example.

It is preferred that each of the third sipes 13, in a cross-sectional view taken perpendicular to a length direction thereof, has a similar cross-sectional shape to that of each of the first sipes 11. That is, each of the third sipes 13 includes a main body portion and a wide width portion (not shown) arranged on an outer side in the tyre radial direction and having a width larger than that of the main body portion. The third sipes 13 configured as such are helpful for improving the ride comfort.

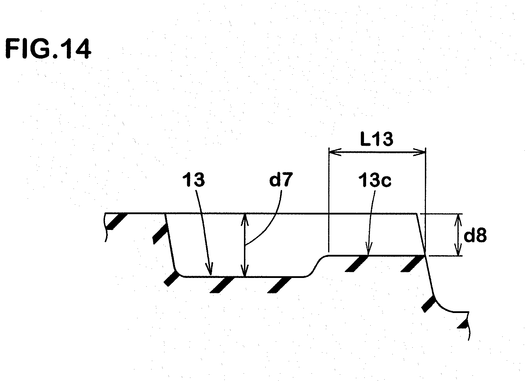

Fig. 14 is a cross-sectional view of one of the third sipes 13 taken along F-F line of Fig. 12. As shown in Fig. 14, each of the third sipes 13 has a shallow bottom portion (13c) having a depth smaller than a maximum depth thereof. Each of the third sipes 13 in this embodiment has the shallow bottom portion (13c) at an inner end portion thereof in the tyre axial direction, for example. The shallow bottom portions (13c) suppress the sipes from opening excessively, therefore, they are helpful for improving the steering stability.

It is preferred that a depth (d8) of each of the shallow bottom portions (13c) is in a range of from 0.15 to 0.50 times the depth of each of the main grooves. Further, it is preferred that the depth (d8) of each of the shallow bottom portions (13c) is in a range of from 0.60 to 0.75 times a maximum depth (d7) of each of the third sipes 13, for example.

It is preferred that a length L13 in the tyre axial direction of each of the shallow bottom portions (13c) is larger than a distance L14 (shown in Fig. 12) in the tyre axial direction between an axially outer one of groove edges of the first main groove 3 and the terminating ends (20i) of each of the outer shoulder lateral grooves 20, for example. It is possible that the shallow bottom portions (13c) configured as such sufficiently suppress the third sipes 13 from opening, therefore, it is possible that the steering stability and the uneven wear resistance are improved.

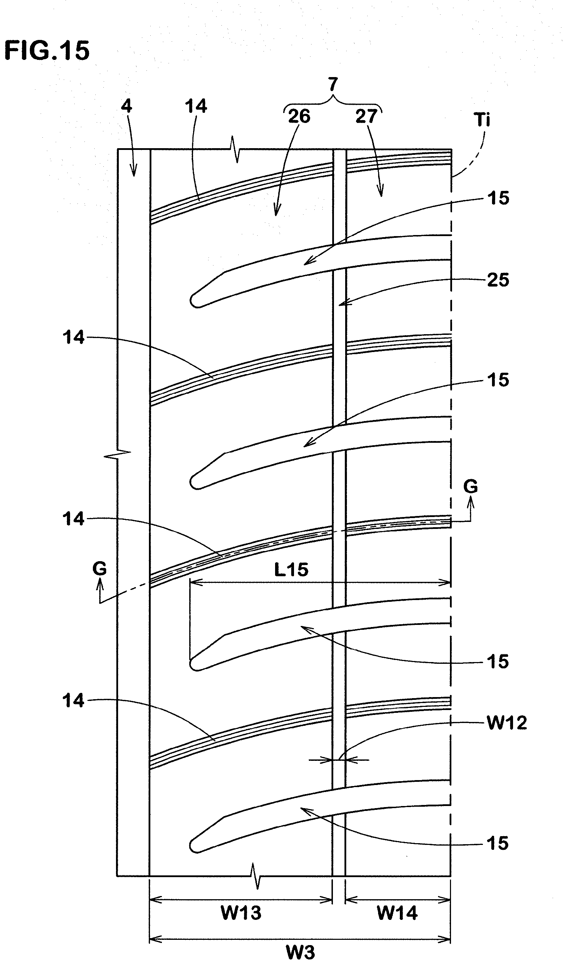

Fig. 15 is an enlarged view of the inner land region 7. As shown in Fig. 15, it is preferred that the width w3 in the tyre axial direction of the inner land region 7 in this embodiment is in a range of from 0.25 to 0.35 times the tread width TW, for example.

The inner land region 7 is provided with a vertical narrow groove 25. The vertical narrow groove 25 has a groove width and a groove depth each of less than 5 mm, and is distinguished from the main grooves described above. A groove width W12 of the vertical narrow groove 25 in this embodiment is in a range of from 0.20 to 0.30 times the groove width w8 of each of the main grooves, for example. The inner land region 7 includes a first part 26 defined between the second main groove 4 and the vertical narrow groove 25 and a second part 27 defined between the vertical narrow groove 25 and the inner tread edge (Ti).

It is preferred that a width W13 in the tyre axial direction of the first part 26 is in a range of from 0.55 to 0.65 times the width w3 of the inner land region 7, for example. It is preferred that width W14 in the tyre axial direction of the second part 27 is in a range of from 0.30 to 0.40 times the width w3 of the inner land region 7, for example.

According to claim 1, the inner land region 7 is provided with the inner lateral grooves 15 and the fourth sipes 14. Each of the inner lateral grooves 15 extends from the inner tread edge (Ti) so as to terminate within the inner land region 7. Each of the fourth sipes 14 extends so as to connect between the second main groove 4 and the inner tread edge (Ti).

Each of the inner lateral grooves 15 extends so as to cross the vertical narrow groove 25 and to terminate within the first part 26 of the inner land region 7, for example. It is preferred that a length L15 in the tyre axial direction of each of the inner lateral grooves 15 is in a range of from 0.80 to 0.90 times the width w3 in the tyre axial direction of the inner land region 7, for example.

It is preferred that each of the inner lateral grooves 15 has a depth gradually decreased axially inwardly between the vertical narrow groove 25 and the second main groove 4, for example. The inner lateral grooves 15 configured as such are helpful for improving the ride comfort and the steering stability in a good balance.

Each of the fourth sipes 14 is curved so as to be convex toward one side in the tyre circumferential direction, for example. It is preferred that a radius of curvature of each of the fourth sipes 14 is larger than the radius of curvature of each of the first sipes 11, for example. Specifically, the radius of curvature of each of the fourth sipes 14 is in a range of from 120 to 150 mm.

It is preferred that each of the fourth sipes 14, in a cross-sectional view taken perpendicular to a length direction thereof, has a similar cross-sectional shape to that of each of the first sipes 11. That is, each of the fourth sipes 14 includes a main body portion and a wide width portion (not shown) arranged on an outer side in the tyre radial direction and having a width larger than that of the main body portion. The fourth sipes 14 configured as such are helpful for improving the ride comfort.

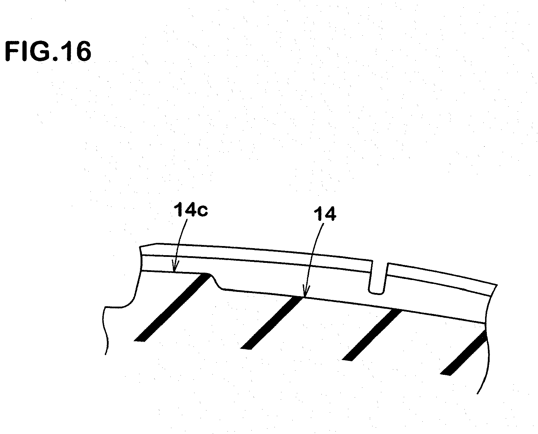

Fig. 16 is a cross-sectional view of one of the fourth sipes 14 taken along G-G line of Fig. 15. As shown in Fig. 16, each of the fourth sipes 14 has a shallow bottom portion (14c) having a depth smaller than a maximum depth thereof. Each of the fourth sipes 14 in this embodiment has the shallow bottom portion (14c) at an inner end portion thereof in the tyre axial direction, for example. The shallow bottom portions (14c) suppress the fourth sipes 14 from opening excessively, therefore, they are helpful for improving the steering stability and the uneven wear resistance.

In this embodiment, a width in the tyre axial direction of the shallow bottom portion (14c) arranged in each of the fourth sipes 14 is larger than a width in the tyre axial direction of the shallow bottom portion of each of the crown sipes 10. The fourth sipes 14 configured as such are helpful for suppressing the uneven wear of the inner land region 7.

As shown in Fig. 8, it is preferred that a land ratio of an outer tread portion 2A defined between the tyre equator (C) and the outer tread edge (To) is larger than a land ratio of an inner tread portion 2B defined between the tyre equator (C) and the inner tread edge (Ti). Thereby, the outer tread portion 2A exerts large cornering force, therefore, it is possible that excellent steering stability is exerted. Note that, in this specification, the term "land ratio" means a ratio (Sb/Sa) between a total area (Sa) of an imaginary ground contacting surface obtained by filling all the grooves and the sipes and an actual total ground contacting area (Sb).

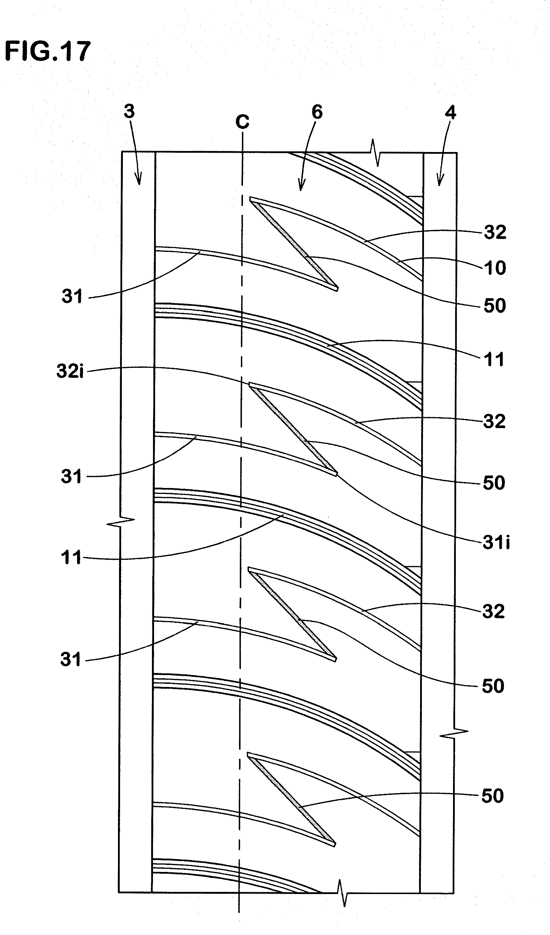

Figs. 17 to 19 are enlarged views of the center land region 6 according to other embodiments if the present invention. In Figs. 17 to 19, the same reference numerals are given to elements common to the above-described embodiments, and the explanation thereof is omitted here.

In the embodiments shown in Figs. 17 to 19, the center land region 6 is provided with shallow narrow grooves 50 each having a width and a depth each of less than 1.5 mm. Note that the shallow narrow grooves 50 are shaded in Figs. 17 to 19 for the purpose of easy understanding. The shallow narrow grooves 50 are helpful for moderately increasing grip force at an initial stage of the tyre usage. Further, the shallow narrow grooves 50 are also useful for shortening a running-in distance until a new tyre exerts its inherent grip force.

In the embodiment shown in Fig. 17, each of the shallow narrow grooves 50 extends linearly between the inner end (31i) of a respective one of the first crown sipes 31 and the inner end (32i) of its adjacent one of the second crown sipes 32. Further, an angle with respect to the tyre axial direction of each of the shallow narrow grooves 50 in this embodiment is larger than an angle with respect to the tyre axial direction of each of the sipes provided in the center land region 6. The shallow narrow grooves 50 configured as such are helpful for increasing frictional force in the tyre axial direction.

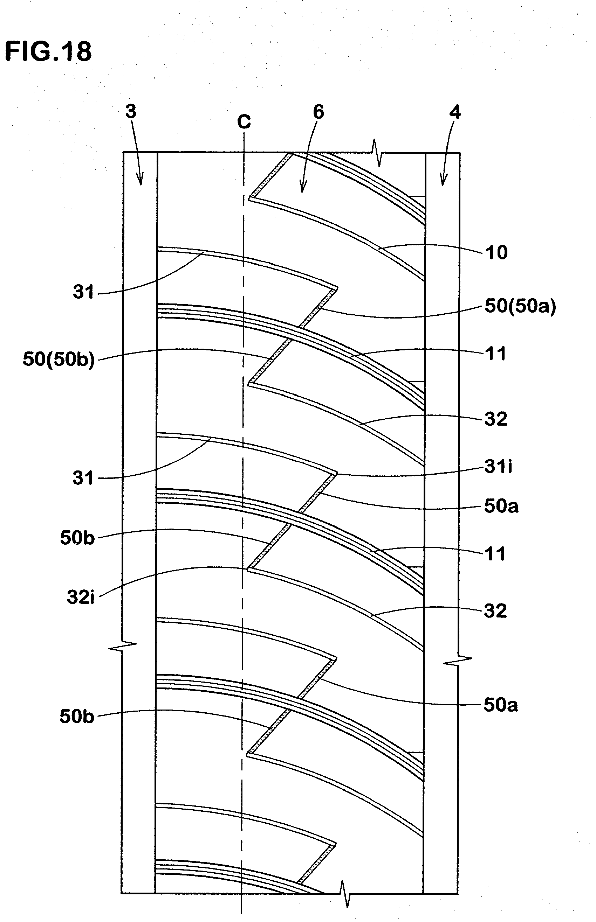

In the embodiment shown in Fig. 18, the shallow narrow grooves 50 include first shallow narrow grooves (50a) each extending so as to connect between the inner end (31i) of a respective one of the first crown sipes 31 and its adjacent one of the first sipes 11, and second shallow narrow grooves (50b) each extending so as to connect between the inner end (32i) of a respective one of the second crown sipes 32 and its adjacent one of the first sipes 11, for example. Each of the first shallow narrow grooves (50a) and the second shallow narrow grooves (50b) is connected with one of the first crown sipes 31 or one of the second crown sipes 32 so as to form an acute angle, for example.

It is preferred that, in each pair of the first shallow narrow groove (50a) and the second shallow narrow grooves (50b) connected with the same first sipe 11, the first shallow narrow groove (50a) and the second shallow narrow grooves (50b) are continuous with each other with the first sipe 11 therebetween. Note that this embodiment includes an embodiment in which a region obtained by extending the first shallow narrow groove (50a) at least partially overlaps with an end portion of the second shallow narrow groove (50b). It is possible that the shallow narrow grooves 50 configured as such suppress rubber chipping in the vicinity of the edges of the first sipes 11.

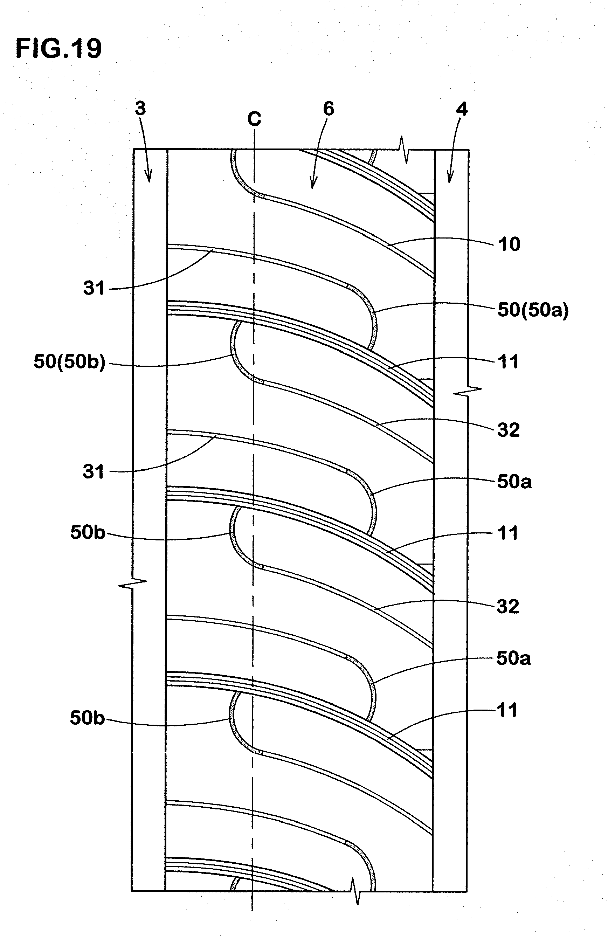

In the embodiment shown in Fig. 19, each of the first shallow narrow grooves (50a) extending between a respective one of the first crown sipes 31 and its adjacent one of the first sipes 11 and each of the second shallow narrow grooves (50b) extending between a respective one of the second crown sipes 32 and its adjacent one of the first sipes 11 are curved so as to be convex in the tyre axial direction.

In this embodiment, in a more preferred embodiment, the first shallow narrow grooves (50a) and the second shallow narrow grooves (50b) are curved so as to be convex toward opposite directions to each other. It is possible that the shallow narrow grooves 50 configured as such efficiently suppress the uneven wear in the vicinity of edges of each of the crown sipes 10 at an initial stage of the tyre usage.

while detailed description has been made of embodiments of the present invention, the present invention can be embodied in various forms without being limited to the illustrated embodiments.

### Working Examples (Examples)

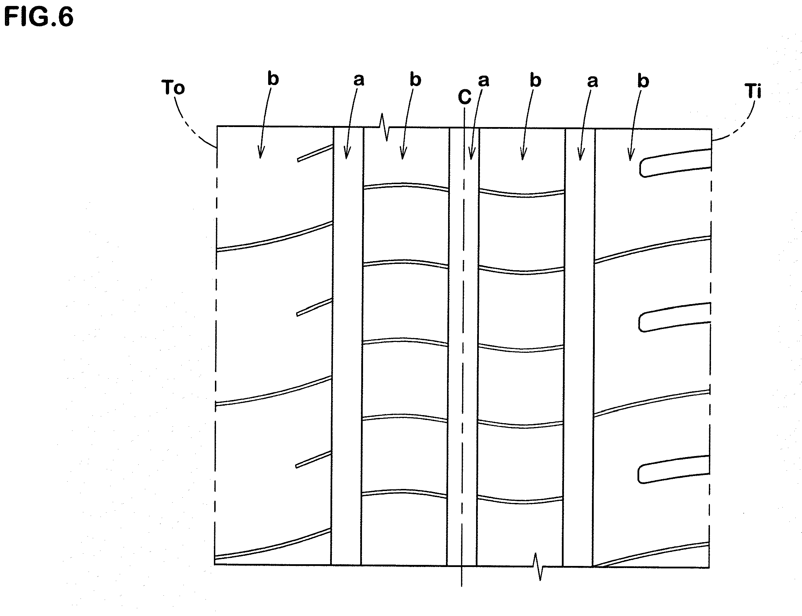

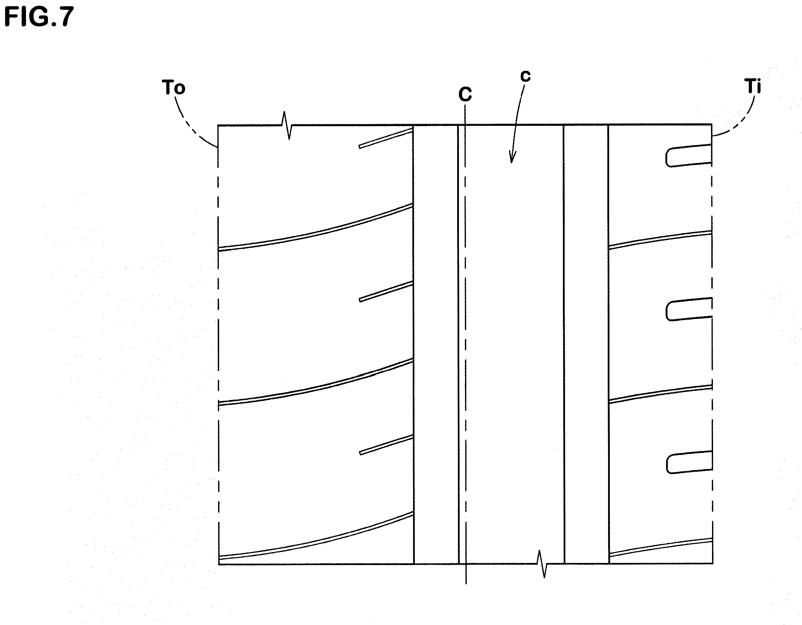

Pneumatic tyres of size 155/65R14 having a basic tread pattern shown in Fig. 1 were made by way of test according to the specification listed in Table 1. As Reference 1, as shown in Fig. 6, tyres each having the tread pattern in which four land regions (b) are divided by three main grooves (a) were made by way of test. Note that a total of groove widths of the three main grooves (a) shown in Fig. 6 is equal to a total of the groove widths of the two main grooves of the tread pattern shown in Fig. 1. Further, as Reference 2, as shown in Fig. 7, tyres each having a center land region (c) not provided with the first sipe were made by way of test. The tread pattern shown in Fig. 7 was substantially the same as the tread pattern shown in Fig. 1 except for the configuration described above. Each of the test tyres was tested for the steering stability and the noise performance. Common specifications of the test tyres and the test methods were as follows.
Tyre rim: 14 x 4.5J
Tyre inner pressure: 240 kPa
Test vehicle: front wheel drive car with a displacement of 660 cc
Tyre mounting position: all wheels

### < Steering stability >

while a test driver drove the test vehicle on a circuit road, the steering stability during changing lanes and during cornering was evaluated by the driver's feeling. Note that this evaluation was carried out by driving the test vehicle at a speed range including a low-mid speed range in a range of from 40 to 80 km/h and a high speed range in a range of from 100 to 120 km/h. The test results are indicated as an evaluation point based on the Reference 1 being 100, wherein larger the numerical value, the better the steering stability is.

### < Noise performance >

while the test vehicle was driven on a rough dry road surface at a speed in a range of from 40 to 100 km/h, a maximum sound pressure of in-car noise (in a range of from 100 to 160 Hz) was measured. The test results are indicated by an index based on the Reference 1 being 100, wherein the smaller the numerical value, the smaller the in-car noise is, which shows better noise performance.

The test results are shown in Table 1.

**Table 1. (1/2)**

| | | Ref.1 | Ref.2 | Ex.1 | Ex.2 | Ex.3 | Ex.4 | Ex.5 | Ex.6 |
|---|---|---|---|---|---|---|---|---|---|
| Figure showing Tread pattern | | Fig.6 | Fig.7 | Fig.1 | Fig.1 | Fig.1 | Fig.1 | Fig.1 | Fig.1 |
| width W1 of Outer land region / Tread width TW | | - | 0.40 | 0.40 | 0.30 | 0.35 | 0.45 | 0.40 | 0.40 |
| width w2 of Center land region / Tread width TW | | - | 0.22 | 0.22 | 0.27 | 0.25 | 0.19 | 0.19 | 0.20 |
| width W3 of Inner land region / Tread width TW | | - | 0.21 | 0.21 | 0.26 | 0.23 | 0.19 | 0.24 | 0.23 |
| Presence or Absence of vertical narrow groove | | - | Absence | Absence | Absence | Absence | Absence | Absence | Absence |
| Steering stability | | 100 | 105 | 108 | 105 | 106 | 106 | 105 | 105 |
| | [evaluation point] | | | | | | | | |
| Noise performance | [index] | 100 | 104 | 99 | 97 | 98 | 99 | 98 | 98 |

**Table 1. (2/2)**

| | | Ex.7 | Ex.8 | Ex.9 | Ex.10 | Ex.11 |
|---|---|---|---|---|---|---|
| Figure showing Tread pattern | | Fig.1 | Fig.1 | Fig.5 | Fig.5 | Fig.5 |
| width W1 of Outer land region / Tread width TW | | 0.40 | 0.40 | 0.30 | 0.35 | 0.45 |
| width w2 of Center land region / Tread width TW | | 0.23 | 0.24 | 0.27 | 0.25 | 0.19 |
| width W3 of Inner land region / Tread width TW | | 0.20 | 0.19 | 0.26 | 0.23 | 0.19 |
| Presence or Absence of vertical narrow groove | | Absence | Absence | Presence | Presence | Presence |
| Steering stability | | 107 | 107 | 104 | 105 | 105 |
| | [evaluation point] | | | | | |
| Noise performance | [index] | 99 | 100 | 96 | 97 | 98 |

From the test results, it was confirmed that the tyres as Examples exerted excellent steering stability while maintaining the noise performance as compared with the tyres as the Reference 1. Further, it was confirmed that the tyres as the Examples exerted excellent noise performance while maintaining the steering stability as compared with the tyres as the Reference 2. As described above, it is confirmed that the tyres of the present invention are capable of improving the steering stability and the noise performance.

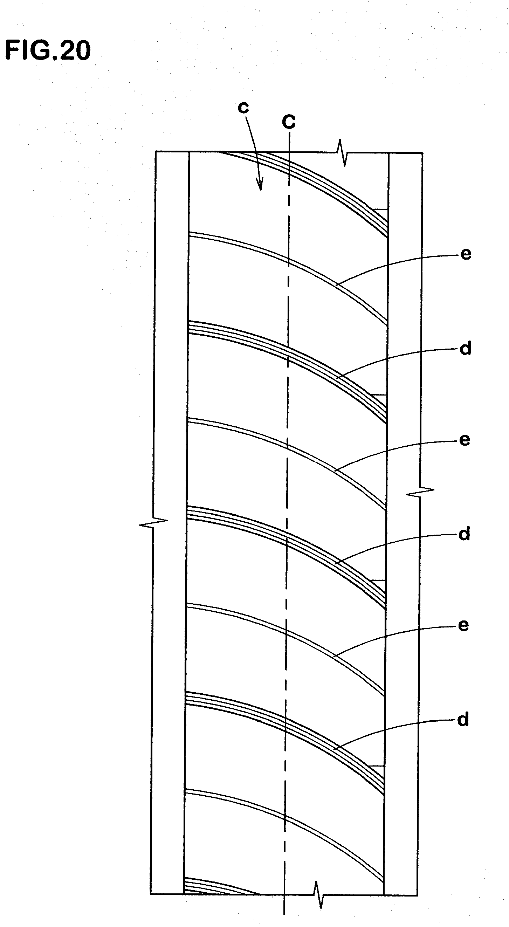

Pneumatic tyres of size 195/65R15 having the basic tread pattern shown in Fig. 8 were made by way of test according to the specification listed in Table 2. As Reference 3, as shown in Fig. 20, pneumatic tyres having the center land region (c) whose center in the tyre axial direction is positioned on the tyre equator (C) and in which two kinds of sipes (d) and (e) each completely crossing the center land region (c) are provided were made by way of test. Note that each of the sipes (d) has the wide width portion and none of the sipes (e) have the wide width portions. The pattern of the tyres as the reference 3 is identical to the one shown in Fig. 8 except for the configuration described above. Each of the test tyres was tested for the steering stability, the ride comfort, and the uneven wear resistance. Common specifications of the test tyres and the test methods were as follows.
Tyre rim: 15 x 6.0
Tyre inner pressure: 200 kPa
Test vehicle: front wheel drive car with a displacement of 2000 cc
Tyre mounting position: all wheels

### < Steering stability >

while the driver drove the test vehicle described above, the steering stability (including the initial responsiveness during cornering) was evaluated by the driver's feeling. The test results are indicated by an index based on the Reference 3 being 100, wherein the larger the numerical value, the better the steering stability is.

### < Ride comfort >

while the driver drove the test vehicle described above on a dry paved road, the ride comfort was evaluated by the deriver's feeling. The test results are indicated by an evaluation point based on the Reference 3 being 100, wherein the larger the numerical value, the better the ride comfort is.

### < Uneven wear resistance >

Wear energy of the center land region was measured by using a wear energy measuring device. The test results are indicated by an index based on the wear energy of the Reference 3 being 100, wherein the smaller the numerical value, the smaller the wear energy, which shows better uneven wear resistance.

Test results are shown in Table 2.

**Table 2.**

| | | Ref.3 | Ex.12 | Ex.13 | Ex.14 | Ex.15 | Ex.16 | Ex.17 | Ex.18 |
|---|---|---|---|---|---|---|---|---|---|
| Figure showing Center land region | | Fig.20 | Fig.9 | Fig.9 | Fig.9 | Fig.9 | Fig.9 | Fig.9 | Fig.9 |
| Displacement amount (Lc) of Center of Center land region / Width w2 of Center land region | | 0 | 0.07 | 0.05 | 0.10 | 0.07 | 0.07 | 0.07 | 0.07 |
| Sipe overlapping length L9 / width w2 of Center land region | | - | 0.34 | 0.34 | 0.34 | 0.25 | 0.30 | 0.40 | 0.45 |
| Steering stability | [evaluation point] | 100 | 106 | 104 | 107 | 104 | 105 | 106 | 106 |
| Ride comfort | [evaluation point] | 100 | 105 | 104 | 105 | 103 | 104 | 105 | 106 |
| Uneven wear resistance | [index] | 100 | 97 | 97 | 100 | 96 | 97 | 98 | 99 |

From the test results, it was confirmed that the tyres as the Examples exerted excellent steering stability. Further, it was confirmed that the ride comfort and the uneven wear resistance were improved for the tyres as the Examples.

## Claims

1. A tyre (1) whose position when mounted on a vehicle is specified comprising a tread portion (2) in which an outer tread edge (To) and an inner tread edge (Ti) are defined, the outer tread edge (To) being positioned on an outer side of the vehicle and the inner tread edge (Ti) being positioned on an inner side of the vehicle when the tyre (1) is mounted on the vehicle, when the tyre in a standard state is in contact with a flat surface with zero camber angle by being loaded with a standard tyre load, wherein the standard state is a state in which the tyre is mounted on a standard rim, inflated to a standard inner pressure, and loaded with no tyre load, said standard rim, standard inner pressure and standard tyre load being those included in a standardization system on which the tyre is based, wherein
the tread portion (2) is provided with
a first main groove (3) extending continuously in a tyre circumferential direction,
a second main groove (4) extending continuously in the tyre circumferential direction on a side of the inner tread edge (Ti) of the first main groove (3),
an outer land region (5) defined between the outer tread edge (To) and the first main groove (3),
a center land region (6) defined between the first main groove (3) and the second main groove (4), and
an inner land region (7) defined between the second main groove (4) and the inner tread edge (Ti),
a width (W1) in a tyre axial direction of the outer land region (5) is larger than a width (W2, W3) in the tyre axial direction of each of the center land region (6) and the inner land region (7), and
the center land region (6) is provided with a plurality of first sipes (11) each completely crossing the center land region (6),
wherein the inner land region (7) is provided with inner lateral grooves (15) each extending from the inner tread edge (Ti) toward the outer tread edge (To) to terminate within the inner land region (7),
**characterized in that**
the inner land region (7) is provided with fourth sipes (14) each completely crossing the inner land region.

2. The tyre (1) according to claim 1, wherein
the width (W1) in the tyre axial direction of the outer land region (5) is in a range of from 0.30 to 0.45 times a tread width (TW).

3. The tyre (1) according to claim 1 or 2, wherein
the width (W2) in the tyre axial direction of the center land region (6) is in a range of from 0.80 to 1.20 times the width (W3) in the tyre axial direction of the inner land region (7).

4. The tyre (1) according to any one of claims 1 to 3, wherein
the first sipes (11) are curved.

5. The tyre (1) according to any one of claims 1 to 4, wherein
the outer land region (5) is provided with a plurality of second sipes (12) each completely crossing the outer land region (5).

6. The tyre (1) according to any one of claims 1 to 5, wherein
each of the outer land region (5), the center land region (6), and the inner land region (7) is not provided with a vertical narrow groove extending in the tyre circumferential direction with a groove width and a groove depth smaller than those of each of the first main groove (3) and the second main groove (4).

7. The tyre (1) according to any one of claims 1 to 6, wherein
the outer land region (5) is provided with a vertical narrow groove (17) extending in the tyre circumferential direction with a groove width smaller than that of each of the first main groove (3) and the second main groove (4).

8. The tyre (1) according to claim 1, wherein
a center (6c) in the tyre axial direction of the center land region (6) is positioned on a side of the second main groove (4) of a tyre equator (c), and
the center land region (6) is provided with
first crown sipes (31) each extending from the first main groove (3) to terminate within the center land region (6) and
second crown sipes (32) each extending from the second main groove (4) to terminate within the center land region (6).

9. The tyre (1) according to claim 8, wherein
each of the first sipes (11) includes, in a cross-sectional view perpendicular to a length direction thereof, a main body portion (11c) and a wide width portion (11d) arranged on an outer side in a tyre radial direction of the main body portion (11c) and having a width (W10) larger than the width (W9) of the main body portion (11c).

10. The tyre (1) according to claim 9, wherein
on an outer surface of the tread portion (2), an opening width of each of the first sipes (11) is larger than an opening width of each of the first crown sipes (31) and an opening width of each of the second crown sipes (32).

11. The tyre (1) according to any one of claims 8 to 10, wherein
each of the first crown sipes (31) and the second crown sipes (32) has an inner end (31i, 32i) terminating within the center land region (6), and
the inner ends (32i) of the second crown sipes (32) are positioned on a side of the first main groove (3) of the inner ends (31i) of the first crown sipes (31).

12. The tyre (1) according to any one of claims 8 to 11, wherein
a maximum depth (d3) of each of the first crown sipes (31) and a maximum depth (d5) of each of the second crown sipes (32) are smaller than a maximum depth (d1) of each of the first sipes (11).

13. The tyre (1) according to any one of claims 8 to 12, wherein
a maximum depth (d3) of each of the first crown sipes (31) is larger than a maximum depth (d5) of each of the second crown sipes (32).

14. The tyre (1) according to any one of claims 8 to 13, wherein
the inner land region (7) is provided with a vertical narrow groove (25) extending in the tyre circumferential direction with a groove width (W12) and a groove depth smaller than those of each of the first main groove (3) and the second main groove (4).

## Patentansprüche

1. Reifen (1), dessen Position bei der Montage an einem Fahrzeug festgelegt ist, mit einem Laufflächenabschnitt (2), in dem eine äußere Laufflächenkante (To) und eine innere Laufflächenkante (Ti) definiert sind, wobei die äußere Laufflächenkante (To) auf einer Außenseite des Fahrzeugs angeordnet ist, und die innere Laufflächenkante (Ti) auf einer Innenseite des Fahrzeugs angeordnet ist, wenn der Reifen (1) an dem Fahrzeug montiert ist und wenn der Reifen in einem Standardzustand durch Belastung mit einer Standard-Reifenlast in Kontakt mit einer ebenen Fläche mit null Sturzwinkel steht, wobei der Standardzustand ein Zustand ist, in dem der Reifen auf eine Standardfelge aufgezogen, auf einen Standard-Innendruck aufgepumpt und ohne Reifenlast belastet ist, wobei die Standardfelge, der Standard-Innendruck und die Standard-Reifenlast diejenigen sind, die in einem Standardisierungssystem enthalten sind, auf dem der Reifen basiert,
wobei der Laufflächenabschnitt (2) versehen ist mit
einer ersten Hauptrille (3), die sich kontinuierlich in einer Reifenumfangsrichtung erstreckt,
einer zweiten Hauptrille (4), die sich kontinuierlich in der Reifenumfangsrichtung auf einer Seite der inneren Laufflächenkante (Ti) der ersten Hauptrille (3) erstreckt,
einem äußeren Landbereich (5), der zwischen der äußeren Laufflächenkante (To) und der ersten Hauptrille (3) definiert ist,
einem zentralen Landbereich (6), der zwischen der ersten Hauptrille (3) und der zweiten Hauptrille (4) definiert ist, und
einem inneren Landbereich (7), der zwischen der zweiten Hauptrille (4) und der inneren Laufflächenkante (Ti) definiert ist,
eine Breite (W1) in der Reifenaxialrichtung des äußeren Landbereichs (5) größer ist als eine Breite (W2, W3) in der Reifenaxialrichtung sowohl des zentralen Landbereichs (6) als auch des inneren Landbereichs (7), und
der zentrale Landbereich (6) mit einer Vielzahl von ersten Feinschnitten (11) versehen ist, die jeweils den zentralen Landbereich (6) vollständig durchqueren, und
der innere Landbereich (7) mit inneren Querrillen (15) versehen ist, die sich jeweils von der inneren Laufflächenkante (Ti) in Richtung der äußeren Laufflächenkante (To) erstrecken, so dass sie innerhalb des inneren Landbereichs (7) enden,
**dadurch gekennzeichnet, dass**
der innere Landbereich (7) mit vierten Feinschnitten (14) versehen ist, die jeweils den inneren Landbereich vollständig durchqueren.

2. Reifen (1) nach Anspruch 1, wobei die Breite (W1) in der Reifenaxialrichtung des äußeren Landbereichs (5) in einem Bereich vom 0,30- bis 0,45-fachen einer Laufflächenbreite (TW) liegt.

3. Reifen (1) nach Anspruch 1 oder 2, wobei die Breite (W2) in der Reifenaxialrichtung des zentralen Landbereichs (6) in einem Bereich vom 0,80- bis 1,20-fachen der Breite (W3) in der Reifenaxialrichtung des inneren Landbereichs (7) liegt.

4. Reifen (1) nach einem der Ansprüche 1 bis 3, wobei die ersten Feinschnitten (11) gekrümmt sind.

5. Reifen (1) nach einem der Ansprüche 1 bis 4, wobei der äußere Landbereich (5) mit einer Vielzahl von zweiten Feinschnitten (12) versehen ist, die jeweils den äußeren Landbereich (5) vollständig durchqueren.

6. Reifen (1) nach einem der Ansprüche 1 bis 5, wobei sowohl der äußere Landbereich (5), der zentrale Landbereich (6) als auch der innere Landbereich (7) nicht mit einer vertikalen schmalen Rille versehen ist, die sich in der Reifenumfangsrichtung erstreckt, mit einer Rillenbreite und einer Rillentiefe, die kleiner als die der ersten Hauptrille (3) und der zweiten Hauptrille (4) sind.

7. Reifen (1) nach einem der Ansprüche 1 bis 6, wobei der äußere Landbereich (5) mit einer vertikalen schmalen Rille (17) versehen ist, die sich in der Reifenumfangsrichtung mit einer Rillenbreite erstreckt, die kleiner als die der ersten Hauptrille (3) und der zweiten Hauptrille (4) ist.

8. Reifen (1) nach Anspruch 1, wobei
ein Zentrum (6c) in der Reifenaxialrichtung des zentralen Landbereichs (6) auf einer Seite der zweiten Hauptrille (4) eines Reifenäquators (C) angeordnet ist, und
der zentrale Landbereich (6) versehen ist mit
ersten Kronenfeinschnitten (31), die sich jeweils von der ersten Hauptrille (3) aus erstrecken, so dass sie innerhalb des zentralen Landbereichs (6) enden, und
zweiten Kronenfeinschnitten (32), die sich jeweils von der zweiten Hauptrille (4) aus erstrecken, so dass sie in dem zentralen Landbereich (6) enden.

9. Reifen (1) nach Anspruch 8, wobei jeder der ersten Feinschnitten (11) in einer Querschnittsansicht senkrecht zu seiner Längsrichtung einen Hauptkörperabschnitt (11c) und einen Abschnitt mit breiter Breite (11d) aufweist, der auf einer Außenseite in einer Reifenradialrichtung des Hauptkörperabschnitts (11c) angeordnet ist und eine Breite (W10) aufweist, die größer als die Breite (W9) des Hauptkörperabschnitts (11c) ist.

10. Reifen (1) nach Anspruch 9, wobei an einer Außenfläche des Laufflächenabschnitts (2) eine Öffnungsbreite jedes der ersten Feinschnitte (11) größer als eine Öffnungsbreite jedes der ersten Kronenfeinschnitte (31) und eine Öffnungsbreite jedes der zweiten Kronenfeinschnitte (32) ist.

11. Reifen (1) nach einem der Ansprüche 8 bis 10, wobei
jeder der ersten Kronenfeinschnitte (31) und der zweiten Kronenfeinschnitte (32) ein inneres Ende (31i, 32i) aufweist, das innerhalb des zentralen Landbereichs (6) endet, und
die inneren Enden (32i) der zweiten Kronenfeinschnitte (32) auf einer Seite der ersten Hauptrille (3) der inneren Enden (31i) der ersten Kronenfeinschnitte (31) angeordnet sind.

12. Reifen (1) nach einem der Ansprüche 8 bis 11, wobei eine maximale Tiefe (d3) jedes der ersten Kronenfeinschnitte (31) und eine maximale Tiefe (d5) jedes der zweiten Kronenfeinschnitte (32) kleiner als eine maximale Tiefe (d1) jedes der ersten Feinschnitte (11) ist.

13. Reifen (1) nach einem der Ansprüche 8 bis 12, wobei eine maximale Tiefe (d3) jedes der ersten Kronenfeinschnitte (31) größer als eine maximale Tiefe (d5) jedes der zweiten Kronenfeinschnitte (32) ist.

14. Reifen (1) nach einem der Ansprüche 8 bis 13, wobei der innere Landbereich (7) mit einer vertikalen schmalen Rille (25) versehen ist, die sich in der Reifenumfangsrichtung mit einer Rillenbreite (W12) und einer Rillentiefe erstreckt, die kleiner als die der ersten Hauptrille (3) und der zweiten Hauptrille (4) sind.

## Revendications

1. Pneumatique (1) dont la position est spécifiée lorsqu'il est monté sur un véhicule, comprenant une portion formant bande de roulement (2) dans laquelle un bord de roulement extérieur (To) et un bord de roulement intérieur (Ti) sont définis, le bord de roulement extérieur (To) étant positionné sur un côté extérieur du véhicule et le bord de roulement intérieur (Ti) étant positionné sur un côté intérieur du véhicule quand le pneumatique (1) est monté sur le véhicule, quand le pneumatique dans un état standard est en contact avec une surface plane avec un angle de cambrage égal à zéro et étant chargé avec une charge standard, dans lequel l'état standard est un état dans lequel le pneumatique est monté sur une jante standard, gonflé à une pression intérieure standard, et en l'absence de charge sur le pneumatique, ladite jante standard, ladite pression intérieure standard et ladite charge standard étant celles qui sont incluses dans un système de normalisation sur lequel le pneumatique est basé,
dans lequel la portion formant bande de roulement (2) est dotée d'une première rainure principale (3) s'étendant en continu dans une direction circonférentielle du pneumatique,
d'une seconde rainure principale (4) s'étendant en continu dans la direction circonférentielle du pneumatique sur un côté du bord de roulement intérieur (Ti) de la première rainure principale (3),
d'une région en relief extérieure (5) définie entre le bord de roulement extérieur (To) et la première rainure principale (3),
d'une région en relief centrale (6) définie entre la première rainure principale (3) et la seconde rainure principale (4), et
d'une région en relief intérieure (7) définie entre la seconde rainure principale (4) et le bord de roulement intérieur (Ti),
une largeur (W1) dans une direction axiale du pneumatique de la région en relief extérieure (5) est plus grande qu'une largeur (W2, W3) dans la direction axiale du pneumatique de chacune de la région en relief centrale (6) et de la région en relief intérieure (7), et
la région en relief central (6) est dotée d'une pluralité de premières fentes (11) qui traversent chacune complètement la région en relief centrale (6), dans lequel la région en relief intérieure (7) est dotée de rainures latérales intérieures (15) s'étendant chacune depuis le bord de roulement intérieur (Ti) vers le bord de roulement extérieur (To) pour se terminer à l'intérieur de la région en relief intérieure (7),
**caractérisé en ce que**
la région en relief intérieure (7) est dotée de quatrièmes fentes (14) qui traversent chacune complètement la région en relief intérieure.

2. Pneumatique (1) selon la revendication 1, dans lequel
la largeur (W1) dans la direction axiale du pneumatique de la région en relief extérieure (5) est dans une plage allant de 0,30 à 0,45 fois une largeur de roulement (TW).

3. Pneumatique (1) selon la revendication 1 ou 2, dans lequel
la largeur (W2) dans la direction axiale du pneumatique de la région en relief centrale (6) est dans une plage allant de 0,80 à 1,20 fois la largeur (W3) dans la direction axiale du pneumatique de la région en relief intérieure (7).

4. Pneumatique (1) selon l'une quelconque des revendications 1 à 3, dans lequel
les premières fentes (11) sont incurvées.

5. Pneumatique (1) selon l'une quelconque des revendications 1 à 4, dans lequel
la région en relief extérieure (5) est dotée d'une pluralité de secondes fentes (12) qui traversent chacune complètement la région en relief extérieure (5).

6. Pneumatique (1) selon l'une quelconque des revendications 1 à 5, dans lequel
chacune de la région en relief extérieure (5), de la région en relief centrale (6), et de la région en relief intérieure (7) n'est pas dotée d'une rainure étroite verticale s'étendant dans la direction circonférentielle du pneumatique avec une largeur de rainure et une profondeur de rainure plus faibles que celles de chacune de la première rainure principale (3) et de la seconde rainure principale (4).

7. Pneumatique (1) selon l'une quelconque des revendications 1 à 6, dans lequel
la région en relief extérieurs (5) est dotée d'une rainure étroite verticale (17) s'étendant dans la direction circonférentielle du pneumatique avec une largeur de rainure plus faible que celle de chacune de la première rainure principale (3) et de la seconde rainure principale (4).

8. Pneumatique (1) selon la revendication 1, dans lequel
un centre (6c) dans la direction axiale du pneumatique de la région en relief centrale (6) est positionné sur un côté de la seconde rainure principale (4) d'un équateur de pneumatique (C), et
la région en relief central (6) est dotée
de premières fentes de couronne (31) s'étendant chacune depuis la première rainure principale (3) pour se terminer à l'intérieur de la région en relief centrale (6), et
de secondes fentes de couronne (32) s'étendant chacune depuis la seconde rainure principale (4) pour se terminer à l'intérieur de la région en relief centrale (6).

9. Pneumatique (1) selon la revendication 8, dans lequel
chacune des premières fentes (11) inclut, dans une vue en section transversale perpendiculaire à une direction en longueur de celle-ci, une portion de corps principale (11c) et une portion à grande largeur (11d) agencée sur un côté extérieur dans une direction radiale du pneumatique de la portion de corps principale (11c) et ayant une largeur (w10) plus grande que la largeur (w9) de la portion de corps principale (11c).

10. Pneumatique (1) selon la revendication 9, dans lequel
sur une surface extérieure de la portion formant bande de roulement (2), une largeur d'ouverture de chacune des premières fentes (11) est plus grande qu'une largeur d'ouverture de chacune des premières fentes de couronne (31) et qu'une largeur d'ouverture de chacune des secondes fentes de couronne (32).

11. Pneumatique (1) selon l'une quelconque des revendications 8 à 10, dans lequel
chacune des premières fentes de couronne (31) et des secondes fentes de couronne (32) a une extrémité intérieure (31i, 32i) qui se termine à l'intérieur de la région en relief centrale (6), et
les extrémités intérieures (32i) des secondes fentes de couronne (32) sont positionnées sur un côté de la première rainure principale (3) des extrémités intérieures (31i) des premières fentes de couronne (31).

12. Pneumatique (1) selon l'une quelconque des revendications 8 à 11, dans lequel
une profondeur maximum (d3) de chacune des premières fentes de couronne (31) et une profondeur maximum (d5) de chacune des secondes fentes de couronne (32) sont plus petites qu'une profondeur maximum (d1) de chacune des premières fentes (11).

13. Pneumatique (1) selon l'une quelconque des revendications 8 à 12, dans lequel
une profondeur maximum (d3) de chacune des premières fentes de couronne (31) est plus grande qu'une profondeur maximum (d5) de chacune des secondes fentes de couronne (32).

14. Pneumatique (1) selon l'une quelconque des revendications 8 à 13, dans lequel
la région en relief intérieure (7) est dotée d'une rainure étroite verticale (25) s'étendant dans la direction circonférentielle du pneumatique avec une largeur de rainure (w12) et une profondeur de rainure plus petites que celles de chacune de la première rainure principale (3) et de la seconde rainure principale (4).
